# EUROPÄISCHE PATENTSCHRIFT

(11) **EP 1 192 061 B1**
(45) Veröffentlichungstag und Bekanntmachung des Hinweises auf die Patenterteilung: **28.07.2004**
(21) Anmeldenummer: 01931608.2
(22) Anmeldetag: 14.04.2001
(51) Int. Cl.: B60N 2/02, B60N 2/44

(54) **Verfahren zur fahrdynamischen Adaption der Körperabstützung einer Sitzenden in einem Fahrzeugsitz und Fahrzeugsitz hierzu**
Method for Adapting Body Support of a Passenger Seated in a Vehicle Seat in terms of Vehicle Movement Dynamics and Corresponding Vehicle
Procédé pour l'adaptation liée à la dynamique de marche et de soutien du corps d'une personne assise dans un siège de véhicule et siège de véhicule correspondant

(30) Priorität: 09.05.2000 DE 10022434
(43) Veröffentlichungstag der Anmeldung: 03.04.2002
(73) Patentinhaber: DaimlerChrysler AG, 70567 Stuttgart (DE)
(72) Erfinder: KATZ, Egon, 72202 Nagold (DE); KUHN, Klaus-Peter, 73655 Plüderhausen (DE); SCHRADER, Jürgen, 71093 Weil im Schönbuch (DE); SCHRÖDER, Wolfram, Tuscaloosa, AL 35405 (US)
(86) Internationale Anmeldenummer: PCT/EP2001/004285
(87) Internationale Veröffentlichungsnummer: WO 2001/085487

(56) Entgegenhaltungen:
- DE-A- 3 541 537
- DE-A- 4 401 416
- DE-A- 19 750 223
- US-A- 5 129 704
- US-A- 5 320 409
- US-A- 5 707 109
- US-A- 5 975 633

## Beschreibung

Die Erfindung betrifft ein Verfahren zur fahrdynamischen Adaption der Körperabstützung, insbesondere der Seitenabstützung, eines Sitzenden in einem Fahrzeugsitz gemäß dem Oberbegriff des Patentanspruchs 1 sowie einen Fahrzeugsitz mit adaptiver Körper-, insbesondere Seitenabstützung gemäß dem Oberbegriff des Patentanspruchs 10.

Ein bekannter fahrdynamisch gesteuerter Fahrzeugsitz (DE 35 41 537 A1) weist zur Körperabstützung des Sitzenden luftbefüllbare Luftkissen auf, die als Schulterstütze im oberen Teil der Rückenlehne, als Seitenstütze in der rechten und linke Seite der Rückenlehne, als Lendenstütze, als Seitenstütze für das Sitzkissen rechts und links sowie als rechtsseitige und linksseitige Stützen für die Oberschenkel in dem Sitzpolster und in dem Lehnenpolster integriert sind. Jedes Luftkissen ist an einer Ventileinheit angeschlossen. Die Ventileinheiten werden von einer CPU (Zentralrechner) angesteuert. Sensoren zur Messung der Fahrgeschwindigkeit des Fahrzeugs, der Querbeschleunigung des Fahrzeugs, der Neigung des Fahrzeugs sowie eines Drehwinkels am Lenkrad liefern entsprechende Meßdaten an die CPU, die ihrerseits über die Ventileinheiten die Befüllung bzw. Entlüftung spezifischer Luftkissen in Abhängigkeit von der Fahrsituation und der Fahrweise steuern. Zur Abstützung bei Auftreten einer Seitenbeschleunigung, wie sie z. B. beim Wenden des Fahrzeugs entsteht, prädiziert die CPU anhand der momentanen Fahrzeuggeschwindigkeit und des vom Sensor am Lenkrad gelieferten Drehwinkels die Größe der Seitenbeschleunigung, die auf den Fahrer ausgeübt werden wird, und steuert die Ventileinrichtungen für die die Seitenabstützung bewirkenden Luftkissen im Sitz- und Lehnenpolster so an, daß die Luftkissen mit einem solchen Druck befüllt werden, wie dies dem Grad der vorausgesagten Seitenbeschleunigung entspricht.

Bei einem bekannten Verfahren zur fahrsituations- und fahrweisenbedingten Adaption der Seitenabstützung eines Sitzenden in einem Fahrzeugsitz (DE 197 50 223 A1) wird die auf den Sitz wirkende Querbeschleunigung, die mit einem Querbeschleunigungssensor gemessen wird, als Bezugsgröße für die Adaption der Seitenabstützung des Sitzenden bestimmt. Um dem Querbeschleunigungsempfinden des Sitzenden stärker Rechnung zu tragen und damit ein komfortables Sitzgefühl mit den Vorteilen eines kurzfristig in den Kurven aufgebauten notwendigen Seitenhalts zu erzeugen, wird die gemessene momentane Querbeschleunigung mit der gemessenen momentanen Fahrgeschwindigkeit des Fahrzeugs gewichtet und daraus eine Steuergröße für das Maß der Adaption bzw. den Grad der Seitenabstützung abgeleitet.

Eine bekannte Fahrzeuggeschwindigkeit-Steuereinrichtung (DE 42 01 142 A1) besitzt ein Fahrzeug-Navigationssystem, z.B. GPS, das den Ort eines Fahrzeugs auf einer abgespeicherten digitalen Straßenkarte angibt, die auf einem Bildschirm dargestellt wird. Die Straßenkarte liefert Informationen über den aktuell befahrenen Straßenabschnitt, einschl. vorhandener Kurven. Die Fahrzeuggeschwindigkeit-Steuereinrichtung empfängt Informationen über eine vorausliegende Kurve einer Straße, z.B. über den Krümmungsradius der Kurve, auf welcher das Fahrzeug fährt und berechnet die Fahrzeug-Grenzgeschwindigkeit, mit welcher das Fahrzeug die Kurve ausfahren und sicher durch die Kurve hindurchfahren kann. Diese Fahrzeug-Grenzgeschwindigkeit wird mit der momentanen Fahrzeuggeschwindigkeit verglichen. Ist die momentane Fahrzeuggeschwindigkeit größer als die Grenzgeschwindigkeit, wird eine Warnung an den Fahrer ausgegeben oder werden geschwindigkeitsreduzierende Maßnahmen automatisch eingeleitet.

Der Erfindung liegt die Aufgabe zugrunde, ein Verfahren der eingangs genannten Art so zu gestalten, daß die Trägheit des zur Adaption der sitzseitigen Körperabstützung verwendeten Adaptionssystems kompensiert wird.

Die Aufgabe ist erfindungsgemäß durch die Merkmale des Patentanspruchs 1 gelöst.

Das erfindungsgemäße Verfahren hat den Vorteil, daß eine Sitzeinstellung zur Adaption der Körperabstützung an ein auftretendes, die Adaption erforderndes Adaptionsereignis, wie z. B. das Durchfahren einer Kurve, nicht reagierend, also erst mit Auftreten des Adaptionsereignisses, sondern agierend durchgeführt wird, so daß die Sitzeinstellung bereits die erforderliche Änderung erfahren hat, wenn das Adaptionsereignis einsetzt. Damit wird die jedem Adaptionssystem immanente Verzögerungszeit zwischen dem Ansteuern des Adaptionssystems und der Sitzveränderung kompensiert. Das Verfahren ist damit nicht mehr auf die Erfassung und Messung auftretender Fahrmanöver angewiesen, sondern nimmt eine Sitzanpassung vor, auch wenn die Messungen noch keine eindeutigen Ergebnisse liefern. Die Meßergebnisse werden nur noch zur Korrektur der durchgeführten Sitzeinstellung benötigt, wobei nur geringe Stellwege auftreten, die nahezu verzögerungsfrei bewältigt werden können. Durch die Prädiktion des Maßes der erforderlichen Sitzadaption aus dem Straßenverlauf und den aktuellen Fahrzeugdaten läßt sich das Adaptionssystem mit fast beliebigem Vorlauf konditionieren und die Körperabstützung allmählich und für den Sitzenden nahezu unmerklich in dem erforderlichen Maße anpassen.

Zweckmäßige Ausführungsformen des erfindungsgemäßen Verfahrens mit vorteilhaften Weiterbildungen und Verbesserungen der Erfindung sind in den Patentansprüchen 2 bis 9 angegeben. Ein Fahrzeugsitz mit einer adaptiven Körperabstützung, in dem das erfindungsgemäße Verfahren realisiert ist, ist in Anspruch 10 angegeben. Vorteilhafte Ausführungsformen des Fahrzeugsitzes enthalten die weiteren Ansprüche 11 bis 13.

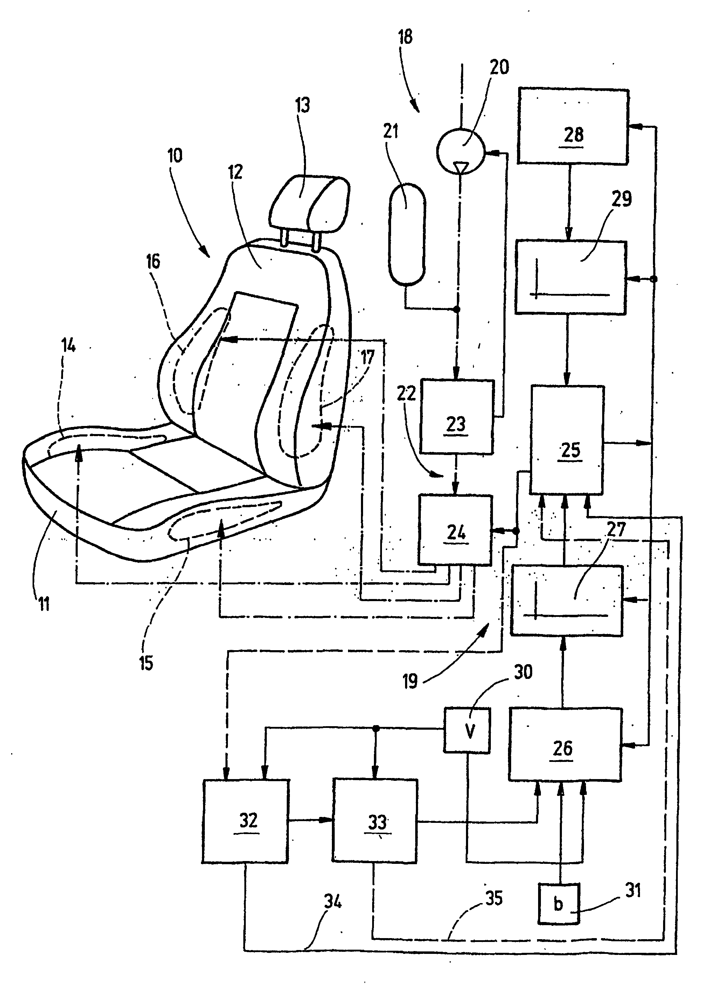

Die Erfindung ist anhand eines in der Zeichnung illustrierten Ausführungsbeispiels im folgenden näher beschrieben. Dabei zeigt die Zeichnung einen perspektivisch dargestellten Fahrersitz für einen Personenkraftwagen mit im Blockschaltbild dargestelltem Adaptionssystem und Steuerung des Adaptionssystems.

Der in der Zeichnung perspektivisch dargestellte Fahrersitz 10 für einen Personenkraftwagen als Ausführungsbeispiel für einen allgemeinen Fahrzeugsitz weist ein gepolstertes Sitzteil 11 und eine gepolsterte Rückenlehne 12 mit davon abstehender Kopfstütze 13 auf. Ein im Fahrzeugsitz 10 integriertes Adaptionssystem 18 ermöglicht eine Veränderung der Polsterkonturen von Sitzteil 11 und Rückenlehne 12 derart, daß der Körper eines Sitzenden im Fahrersitz 10 optimal abgestützt ist. Bei dem hier beschriebenen Adaptionssystem 18 beschränkt man sich auf eine Seitenabstützung des Körpers, insbesondere bei Kurvenfahrten, wozu das Adaptionssystem 18 Luftkissen 14, 15 und 16, 17 aufweist, die jeweils in Seitenwülsten von Sitzteil 11 und Rückenlehne 12 integriert sind. Sind die Luftkissen 14 - 17 vollständig aufgeblasen, so wird eine maximale Seitenabstützung des Fahrers im Becken- und Rückenbereich erzielt, die mit Abnahme des Luftdrucks in den Luftkissen 14 - 17 zurückgenommen werden kann. Über die Seitenabstützung hinaus kann aber auch noch eine Schulterabstützung im oberen Teil der Rückenlehne eine Lendenabstützung im unteren Bereich der Rückenlehne und eine Oberschenkelabstützung im vorderen Bereich des Sitzteils 11 erfolgen, wozu auch dort Luftkissen in den entsprechenden Polsterabschnitten integriert sind, wie dies z. B. in der DE 35 41 537 A1 beschrieben ist.

Zum Befüllen bzw. Entlüften der Luftkissen 14 - 17 weist das Adaptionssystem 18 eine Druckluftpumpe 20, einen Druckluftspeicher 21 und eine an diesem angeschlossene Druckluftreguliereinrichtung 22 auf. Die Druckluftreguliereinrichtung 22 umfaßt eine Drucksteuerung 23, die die Druckluftpumpe 20 schaltet, um eingangsseitig einen konstanten Überdruck zu halten, und einen Magnetventilblock 24, der den Eingangsdruck spezifisch in die vier Luftkissen 14 - 17 einzusteuern vermag. Die in dem Magnetventilblock 24 integrierte Druckregelung eröffnet auch die Möglichkeit, den Druck in den Luftkissen 14 - 17 durch Entlüften zu reduzieren. Das Adaptionssystem 18 ist von einer Steuereinheit 19 gesteuert, die einen zentralen, direkt auf den Magnetventilblock 24 zugreifenden Steuerrechner 25 sowie von dem Steuerrechner 25 gesteuerte Verarbeitungsblöcke 26 - 29 aufweist. An die Steuereinheit 19 sind zwei Sensoren 30 und 31 angeschlossen, wobei der Sensor 30 die aktuelle Fahrzeuggeschwindigkeit v und der Sensor 31 die auf den Fahrzeugsitz wirkende aktuelle Querbeschleunigung b mißt. In dem Block 26 ist ein Gewichtungsalgorithmus abgespeichert, der den Zusammenhang zwischen der Fahrzeuggeschwindigkeit v und der von dem Fahrer "empfundenen" Querbeschleunigung beschreibt. Mit diesem Algorithmus wird die aktuelle Querbeschleunigung b in eine "empfundene" Querbeschleunigung transformiert. Damit wird dem Phänomen Rechnung getragen, daß der Fahrer bei geringer Geschwindigkeit eine große Querbeschleunigung ohne Wunsch nach Seitenabstützung akzeptiert und bei großer Geschwindigkeit bereits bei kleinen Querbeschleunigungswerten eine Seitenabstützung für wünschenswert hält. Im Block 27 ist eine erste Kennlinie abgespeichert, die eine Verknüpfung von "empfundener Querbeschleunigung" und einem hierfür als wünschenswert ermittelten Grad der einseitigen Seitenabstützung vorgibt. Aus der aktuell gemessenen Querbeschleunigung b und der aktuelle gemessenen Fahrzeuggeschwindigkeit v wird im Block 26 die "empfundene Querbeschleunigung" ermittelt und mit dieser aus der Kennlinie im Block 27 eine Steuergröße gebildet, die als elektrisches Signal von dem zentralen Steuerrechner 25 der Druckreguliereinrichtung 22 - und dort dem Magnetventilblock 24 - zur Einstellung des Ausgangsdrucks zugeführt wird.

Im Block 28 erfolgt die Klassifikation der Fahrweise des Fahrzeugführers, wie dies z. B. in der DE 44 01 416 A1 beschrieben ist. Im Block 29 ist eine zweite Kennlinie abgespeichert, die eine Verknüpfung von Fahrweise und einem hierfür als wünschenswert ermittelten Maß der Seitenabstützung vorgibt. Aus dieser Kennlinie wird im Block 29 mittels des Klassifikationsergebnisses aus Block 28 eine Zusatzsteuergröße ausgelesen, die wiederum als elektrisches Signal von dem zentralen Steuerrechner 25 dem Magnetventilblock 24 zugeführt wird, der einen entsprechenden Ausgangsdruck einstellt. Die Zusatzsteuergröße führt zu einer Einstellung des Druckniveaus im Adaptionssystem 18, das mit Ansteuerung des Magnetventilblocks 24 in allen vier Luftkissen 14 - 17 im Fahrersitz 10 eingesteuert wird und ein der Fahrweise des Fahrers angepaßtes Grundmaß einer Seitenabstützung im Sitz 10 ergibt. Nachdem dieser Grunddruck in allen Luftkissen 14 - 17 eingestellt ist, werden die Magnetventile im Magnetventilblock 24 durch den zentralen Steuerrechner 25 in ihrer Druckhaltestellung überführt.

Bei Kurvenfahrten wird aus dem Block 27 dem Steuerrechner 25 die wie vorstehend beschrieben ermittelte Steuergröße zugeführt. Im Steuerrechner 25 werden die Steuergröße und die Zusatzsteuergröße verknüpft, und das dem Magnetventilblock 25 zugeführte elektrische Signal bewirkt im Adaptionssystem 18 eine Luftdruckeinstellung, die der Überlagerung von Steuergröße und Zusatzsteuergröße entspricht. Je nach Richtung der aktuellen Querbeschleunigung b steuert der Steuerrechner 25 die entsprechenden Magnetventile im Magnetventilblock 24 an. Dadurch wird der Druck in den beiden in der Kurve außen liegenden Luftkissen 14 und 16 bzw. 15 und 17 von Sitzteil 11 und Rückenlehne 12 auf den höheren Luftdruck eingeregelt, während das Druckniveau in den beiden in der Kurve innen liegenden anderen Luftkissen nach wie vor dem zuvor aufgrund der ermittelten Fahrweise des Fahrer eingestellten Grunddruck entspricht.

Um die dem Adaptionssystem 18 innenwohnende Trägheit zu kompensieren und die Verzögerungszeiten zwischen dem Messen der aktuellen Querbeschleunigung b und der Einstellung der Luftkissen 14 - 17 zu eliminieren, ist eine Prädiktionsvorrichtung 32 zum Vorausermitteln des in einer aktuellen Kurve zu erwartenden Wertes der Querbeschleunigung sowie ein der Prädiktionsvorrichtung 32 nachgeschaltetes Prädiktionsfilter 33 vorgesehen, das ausgangsseitig mit der Steuereinheit 19 verbunden ist und den von der Prädiktionsvorrichtung 32 gelieferten, prädizierten Wert der Querbeschleunigung unter Berücksichtigung der fülldruckabhängigen Befüllzeiten des Adaptionssystems 18 an die Steuereinheit 19 legt.

Im einem ersten Ausführungsbeispiel weist die Prädiktionsvorrichtung 32 ein Fahrzeug-Navigationssystem sowie eine digitale Straßenkarte auf, die Streckendaten über ein Verkehrsnetz und ggf. auch den Streckendaten zugeordnete Attributdaten enthält. Als Beispiel für eine solche Prädiktionsvorrichtung kann die in der DE 42 01 142 A1 beschriebene Fahrzeuggeschwindigung-Steuereinrichtung verwendet werden, die von der digitalen Straßenkarte Informationen über eine vorausliegende Kurve und deren Attribute, z. B. deren Krümmungsradius, entnimmt und mit den Fahrzeugdaten eine Fahrzeug-Grenzgeschwindigkeit berechnet, mit welcher das Fahrzeug die Kurve ausfahren und sicher durch die Kurve hindurchfahren kann. Diese Fahrzeuggeschwindigkeits-Steuereinrichtung kann dabei problemlos die in der Kurve zu erwartende, auf das Fahrzeug wirkende Querbeschleunigung bei der aktuellen Fahrzeuggeschwindigkeit prädizieren. Die aktuelle Fahrzeuggeschwindigkeit wird der Prädiktionsvorrichtung 32 und dem Prädiktionsfilter 33 vom Fahrzeuggeschwindigkeits-Sensor 30 zugeführt.

Am Beispiel einer zu durchfahrenden Kurve wird nachfolgend das ablaufende Verfahren zur fahrdynamischen Adaption der Seitenabstützung des Sitzenden auf dem Fahrersitz beschrieben:

Aus den der abgespeicherten Straßenkarte entnommenen Daten über den aktuellen Straßenverlauf und den auf den Straßenverlauf projizierten aktuellen Fahrzeugdaten wird in größerer Entfernung vor der Kurve die zu erwartende, in der Kurve auf den Sitzenden wirkende Querbeschleunigung prädiziert. Über das Prädiktionsfilter 33 wird unter Berücksichtigung der systemimmanenten, fülldruckabhängigen Verzögerungszeit des Adaptionssystems 18 und der momentanen, vom Sensor 30 ausgegebenen Fahrzeuggeschwindigkeit die prädizierte Beschleunigung an die Steuereinrichtung 19 und dort an den Verarbeitungsblock 26 gegeben. Zu diesem Zeitpunkt liegt noch kein vom Sensor 31 ausgegebener Beschleunigungswert an der Steuereinheit 19 an. Wie bereits erwähnt, wird der prädizierte Wert der Querbeschleunigung in eine "empfundene Querbeschleunigung" transformiert und im Block 27 mit dieser "empfundenen Querbeschleunigung" der Grad der einseitigen Seitenabstützung ermittelt und eine entsprechende Steuergröße an den zentralen Steuerrechner 25 gegeben. Der zentrale Steuerrechner 25 gibt ein entsprechendes elektrisches Steuersignal an die Druckreguliereinrichtung 22, die den Befüllungsdruck in den rechten bzw. linken Luftkissen 14, 16 bzw. 15, 17 von Sitzkissen 11 und Rückenlehne 12 verändert. Damit ist zum Zeitpunkt, in dem das Fahrzeug in die Kurve einfährt, bereits eine Sitzvoreinstellung bezüglich der Seitenabstützung durchgeführt, und mit der nunmehr über den Beschleunigkeitssensor 31 gemessenen Querbeschleunigung wird lediglich noch eine Feinkorrektur der Sitzvoreinstellung durch minimales Be- oder Entlüften der Luftkissen 14 - 17 vorgenommen.

Die beschriebene Prädiktionsvorrichtung 32 kann zusätzlich dazu herangezogen werden, dem Fahrer auf haptischem Weg zu signalisieren, daß die vorausliegende Kurve mit einer zu hohen Fahrgeschwindigkeit angesteuert wird. Hierzu wird aus der in der Prädiktionsvorrichtung 32 ermittelten Grenzgeschwindigkeit das beim Durchfahren der Kurve auftretende Maximum der Querbeschleunigung ermittelt und mit der prädizierten Querbeschleunigung verglichen. Überschreitet die prädizierte Querbeschleunigung den ermittelten Maximalwert, so wird über eine direkte Steuersignalleitung 34 zwischen Prädiktionsvorrichtung 32 und zentralem Steuerrechner 25 diesem ein Steuersignal zugeführt, das der zentrale Steuerrechner 25 in ein Steuersignal für die Druckregulierungseinrichtung 22 derart umsetzt, daß in den seitlichen Luftkissen 14 und 16 oder 15 und 17 schlagartig ein hoher Befüllungsdruck ausgesteuert wird, der dem Fahrer auf haptischem Wege anzeigt, daß die Kurve zu schnell angefahren wird. Je nach Krümmungsrichtung der Kurve werden dabei die Luftkissen 14, 16 bzw. 15, 17 befüllt, die auf der in Krümmungsrichtung außenliegenden Seite des Fahrzeugsitzes 10 angeordnet sind.

In einem weiteren Ausführungsbeispiel kann die Prädiktionsvorrichtung 32 noch dahingehend modifiziert werden, daß in der digitalen Straßenkarte als sog. lernende Karte Aktionen der Sitzeinstellung bzw. Sitzadaption gespeichert werden. Dabei werden beispielsweise markante Punkte, an denen bei einer gemessenen Fahrzeuggeschwindigkeit bei der ersten Fahrt Druckveränderungen in den Luftkissen 14 - 17 vorgenommen wurden, in Zuordnung zu den Streckendaten als weitere Attribute, im folgenden Adaptionsattribute genannt, abgespeichert. Hierzu ist - wie in der Zeichnung strichliniert angedeutet ist - das vom zentralen Steuerrechner 25 für die Druckluftreguliereirichtung 22 erzeugte Steuersignal auch der Prädiktionsvorrichtung 32 zugeführt, so daß das Auftreten und die Größe der Steuersignale als Ortspunkte für Sitzveränderungen in der lernenden Straßenkarte abgespeichert werden. Beim Wiederbefahren des Streckenabschnittes werden dann diese Adaptionsattribute vom Prädiktionsfilter 33 mitverwendet, den Zeitpunkt einer Aktion durch Anlegen eines prädizierten Wertes der Querbeschleunigung an den Block 26 der Steuereinheit 19 zu bestimmen. Zusätzlich ist es auch möglich, in der lernenden Straßenkarte die prädizierte Querbeschleunigung bezogen auf die Geschwindigkeit zusammen mit den Streckendaten abzuspeichern. Bei Wiederbefahren des gleichen Streckenabschnitts kann damit auf die bereits prädizierte Querbeschleunigung zurückgegriffen werden, die dann nur noch mit der aktuellen Fahrzeuggeschwindigkeit umgerechnet werden muß.

In einer alternativen Ausführungsform von Prädiktionsvorrichtung 32 und Prädiktionsfilter 33 ist das Prädiktionsfilter 33 durch eine in der Zeichnung strichliniert angedeutete weitere Steuersignalleitung 35 direkt mit dem zentralen Steuerrechner 25 verbunden. In diesem Fall werden die vom Zentralrechner 25 über die Druckluftreguliereinrichtung 22 in den Luftkissen 14 - 17 eingesteuerten Befüllungsdrücke geschwindigkeitsbereinigt, z. B. als Druckänderungspunkt oder Druckniveau, in der lernenden Straßenkarte in Zuordnung zu den Streckendaten abgespeichert. Beim Wiederbefahren des gleichen Streckenabschnitts werden dann die abgespeicherten Druckstufen skaliert mit der aktuellen Fahrzeuggeschwindigkeit als prädiktive Druckstufen direkt an den zentralen Steuerrechner 25 zur Solldruckvorgabe gelegt, der dann seinerseits die Druckreguliereinrichtung 22 zur Einstellung dieser Solldrücke in den Luftkissen 14 - 17 ansteuert.

Die Erfindung ist nicht auf das beschriebene Ausführungsbeispiels eines als Pneumatiksystem ausgebildeten Adaptionssystems 18 beschränkt. Prinzipiell kann jedes Adaptionssystem verwendet werden, das die Seitenführungskontur des Fahrzeugsitzes 10 verändert. Auch ist das beschriebene Verfahren nicht darauf beschränkt, eine Seitenabstützung des Fahrers oder weiterer Fahrzeuginsassen beim Kurvenfahren durchzuführen. Möglich ist auch eine Veränderung der Lendenabstützung oder der Abstützung der Oberschenkel im Sitzkissen in Abhängigkeit von dem zu erwartenden Verlauf des aktuell befahrenen Straßenabschnitts, z. B. in Streckenabschnitten mit starken Gefällen oder Steigungen.

## Patentansprüche

1. Verfahren zur fahrdynamischen Adaption der Körperabstützung, insbesondere der Seitenabstützung, eines Sitzenden in einem Fahrzeugsitz (10), bei dem ein Maß für eine aktuelle Adaption unter Berücksichtigung der aktuellen Fahrzeuggeschwindigkeit prädiziert und durch ein im Fahrzeugsitz integriertes Adaptionssystem eingestellt wird,
**dadurch gekennzeichnet,**
**daß** die Prädiktion aus abgespeicherten Daten über den aktuellen Straßenverlauf, auf die die aktuellen Fahrzeugdaten projiziert werden, vorgenommen wird und daß unter Berücksichtigung der systemimmanenten Adaptionszeit die Ansteuerung des Adaptionssystems (18) so durchgeführt wird, daß mit Eintreten des die Adaption erfordernden Ereignisses, vorzugsweise des Durchfahrens einer Kurve, zumindest eine daran angepaßte Adaptionsvoreinstellung erreicht ist.

2. Verfahren nach Anspruch 1,
**dadurch gekennzeichnet,**
**daß** während des die Adaption erfordernden Ereignisses eine Korrektur der Adaptionsvoreinstellung mit aktuell gemessenen Fahrzeugdaten durchgeführt wird.

3. Verfahren nach Anspruch 1 oder 2,
**dadurch gekennzeichnet,**
**daß** der aktuelle Straßenverlauf einer digitalen Straßenkarte, die Streckendaten über ein Verkehrsnetz und den Streckendaten zugeordnete Attributdaten enthält, entnommen wird, daß Daten von durchgeführten Sitzadaptionen in Zuordnung zu Streckendaten als Adaptionsattribute in der Straßenkarte abgespeichert werden und daß bei Wiederbefahren des Streckenabschnitts die Ansteuerung des Adaptionssystems (18) unter Verwendung der Adaptionsattribute durchgeführt wird.

4. Verfahren nach Anspruch 3,
**dadurch gekennzeichnet,**
**daß** als Adaptionsattribute ein geschwindigkeitsbereinigtes Adaptionsmaß abgespeichert wird.

5. Verfahren nach einem der Ansprüche 1 - 5,
**dadurch gekennzeichnet,**
**daß** zur Bestimmung des beim Durchfahren einer Kurve erforderlichen Adaptionsmaßes die zu erwartende, auf den Fahrzeugsitz wirkende Querbeschleunigung prädiziert und damit der Grad der Seitenabstützung berechnet wird.

6. Verfahren nach Anspruch 2 und 5,
**dadurch gekennzeichnet,**
**daß** beim Durchfahren der Kurve die real auftretende Querbeschleunigung gemessen und damit der Grad der Seitenabstützung korrigiert wird.

7. Verfahren nach Anspruch 3 und 5 oder 6,
**dadurch gekennzeichnet,**
**daß** als Adaptionsattribute die prädizierte und/oder gemessene Querbeschleunigung abgespeichert wird.

8. Verfahren nach einem der Ansprüche 5 - 7,
**dadurch gekennzeichnet,**
**daß** bei Überschreiten eines aus einer prädizierten Grenzgeschwindigkeit für das Durchfahren einer Kurve abgeleiteten Maximums der Querbeschleunigung durch die prädizierte Querbeschleunigung ein Warnsignal für den Fahrer ausgegeben wird.

9. Verfahren nach Anspruch 8,
**dadurch gekennzeichnet,**
**daß** das Warnsignal durch eine schlagartige Erhöhung der Seitenabstützung auf der in Krümmungsrichtung der Kurve außenliegenden Sitzseite dem Fahrer auf haptischem Wege zugeführt wird.

10. Fahrzeugsitz mit einem Sitzteil (11) und einer Rückenlehne (12), mit einem Adaptionssystem (18) zur Adaption der Körper-, insbesondere der Seitenabstützung eines Sitzenden im Fahrzeugsitz (10), das mindestens in Seitenwülsten von Sitzteil (11) und/oder Rückenlehne (12) integrierte Luftkissen (14 - 17) und eine Druckluftreguliereinrichtung (22) zum Einstellen des Luftdrucks in den Luftkissen (14 - 17) aufweist, mit einer einen Steuerrechner (25) aufweisenden Steuereinheit (19), die mit der Druckluftreguliereinrichtung (22) verbunden ist und aus einem ihr zugeführten Wert einer Querbeschleunigung ein Steuersignal zur Einstellung eines Fülldrucks durch, die Druckreguliereinrichtung (22) generiert, und mit einem Sensor (30) zur Messung der Fahrzeuggeschwindigkeit,
**gekennzeichnet durch**
eine Prädiktionsvorrichtung (32) zur Prädiktion der in einer aktuellen Kurve zu erwartenden Querbeschleunigung und ein Prädiktionsfilter (33), das die prädizierte Querbeschleunigung unter Berücksichtigung der fülldruckabhängigen Befüllzeiten des Adaptionssystems (18) an die Steuereinheit (19) legt.

11. Fahrzeugsitz nach Anspruch 10,
**dadurch gekennzeichnet,**
**daß** die Prädiktionsvorrichtung (32) eine digitale Straßenkarte aufweist, die Streckendaten über ein Verkehrsnetz und den Streckendaten zugeordnete Attributdaten enthält, daß Zeitpunkte einer Fülldruckänderung durch die Druckluftreguliereinrichtung (22) in Zuordnung zu der Fahrzeuggeschwindigkeit und den Streckendaten als Adaptionsattribute in der Straßenkarte abspeicherbar sind und daß bei Wiederbefahren des Streckabschnitts das Prädiktionsfilter (33) die Adaptionsattribute an die aktuelle Fahrgeschwindigkeit anpaßt und zur Festlegung des Zeitpunkts des Anlegens der prädizierten Querbeschleunigung an die Steuereinheit (19) heranzieht.

12. Fahrzeugsitz nach Anspruch 10,
**dadurch gekennzeichnet,**
**daß** die Prädiktionsvorrichtung (32) eine digitale Straßenkarte aufweist, die Streckendaten über ein Verkehrsnetz und den Streckendaten zugeordnete Attributdaten enthält, daß von der Druckluftreguliereinrichtung (22) ausgesteuerte Fülldrücke geschwindigkeitsbereinigt in Zuordnung zu den Streckendaten als Adaptionsattribute in der Straßenkarte abspeicherbar sind und daß bei Wiederbefahren des Streckenabschnitts das Prädiktionsfilter (33) die Adaptionsattribute direkt als Solldruckwerte an den Steuerrechner (25) legt.

13. Fahrzeugsitz nach einem der Ansprüche 10 - 12,
**dadurch gekennzeichnet,**
**daß** die Prädiktionsvorrichtung (32) aus einer prädizierten Grenzgeschwindigkeit mit der eine aktuelle Kurve durchfahrbar ist, ein Maximum der Querbeschleunigung prädiziert und bei Überschreiten des Maximums durch die prädizierte Querbeschleunigung einen maximalen Druckwert als Solldruckwert für eine Einstellung des Fülldrucks in den Füllkissen (14 - 17), die auf der in Krümmungsrichtung der Kurve außenliegenden Seite des Fahrzeugssitzes (10) angeordnet sind, legt.

## Claims

1. Method for the drive-dynamic adaptation of the body support, in particular the lateral support, of a person sitting in a vehicle seat (10), whereby a measure for a current adaptation is predicted while taking into account the current speed of the vehicle and adjusted by an adaptation system integrated into the vehicle seat,
**characterised in that**
the prediction is based on stored data on the current course of the road, onto which current vehicle data are projected, and **in that**, taking into account the system-immanent adaptation time, the adaptation system (18) is so triggered that, on the occurrence of the event requiring adaptation, preferably the negotiation of a comer, at least one matching adaptation presetting is reached.

2. Method according to claim 1,
**characterised in that**
a correction of the adaptation presetting using currently measured vehicle data is performed during the event requiring the adaptation.

3. Method according to claim 1 or 2,
**characterised in that**
the current course of the road is taken from a digital road map containing route data on a traffic network and attribute data assigned to said route data, **in that** data of previous seat adaptations are assigned to route data and stored in the road map as adaptation attributes, and **in that** the adaptation system (18) is triggered on the basis of said adaptation attributes whenever that route section is negotiated again.

4. Method according to claim 3,
**characterised in that**
a speed-modified adaptation measure is stored as an adaptation attribute.

5. Method according to any of claims 1 to 5,
**characterised in that**
the expected transverse acceleration acting on the vehicle seat is predicted to determine the measure of adaptation required when negotiating a comer and the predicted value is used to calculate the degree of lateral support.

6. Method according to claims 2 and 5,
**characterised in that**
the actual transverse acceleration generated when negotiating a comer is measured and the measured value is used to correct the degree of lateral support.

7. Method according to claim 3 and 5 or 6,
**characterised in that**
the predicted and/or measured transverse acceleration is/are stored as adaptation attributes.

8. Method according to any of claims 5 to 7,
**characterised in that**
when the predicted transverse acceleration exceeds a maximum transverse acceleration value derived from a predicted limit speed for the negotiation of a comer, a warning signal for the driver is output.

9. Method according to claim 8,
**characterised in that**
the warning signal is transmitted to the driver in the haptic way by a sudden increase of lateral support on the side of the seat which is on the outside of the comer in the direction of curvature.

10. Vehicle seat comprising a seat part (11) and a backrest (12), with an
adaptation system (18) for the adaptation of the body support, in particular the lateral support, of a person sitting in the vehicle seat (10), featuring air cushions (14 - 17) integrated at least into side pads of the seat part (11) and/or the backrest (12) and a pneumatic regulator (22) for adjusting the air pressure in the air cushions (14 - 17), with a control unit (19) incorporating a control computer (25) connected to the pneumatic regulator (22) and generating a control signal for the adjustment of a charge pressure by the pneumatic regulator (22) on the basis of a transverse acceleration value fed to it, and with a sensor (30) for measuring the vehicle speed,
**characterised by**
a prediction device (32) for the prediction of a transverse acceleration to be expected in a current comer, and a prediction filter (33) applying the predicted transverse acceleration to the control unit (19) while taking into account the charge pressure-dependent charging times of the adaptation system (18).

11. Vehicle seat according to claim 10,
**characterised in that**
the prediction device (32) incorporates a digital road map with route data on a traffic network and attribute data assigned to said route data, **in that** the times of a charge pressure change by the pneumatic regulator (22) can be stored in the road map as adaptation attributes assigned to vehicle speed and route data, and **in that** the prediction filter (33) matches the adaptation attributes to current vehicle speed whenever the same route section is negotiated again and uses them to determine the time at which the predicted transverse acceleration is to be applied to the control unit (18).

12. Vehicle seat according to claim 10,
**characterised in that**
the prediction device (32) incorporates a digital road map with route data on a traffic network and attribute data assigned to said route data, **in that** charge pressures modulated by the pneumatic regulator (22) can be speed-modified, assigned to the route data and stored in the road map as adaptation attributes, and **in that** the prediction filter (33) applies the adaptation attributes as set pressure values directly to the control computer (25) whenever the same route section is negotiated again.

13. Vehicle seat according to any of claims 10 to 12,
charactensed in that
the prediction device (32) predicts from a predicted limit speed for the negotiation of a current comer a maximum for the transverse acceleration and, when this maximum is exceeded by the predicted transverse acceleration, determines a maximum pressure value as a set pressure value for an adjustment of the charge pressure in the air cushions (14 - 17) on the side of the vehicle seat (10) which is on the outside of the comer in the direction of curvature.

## Revendications

1. Procédé pour l'adaptation liée à la dynamique de marche du soutien, en particulier du soutien latéral, du corps d'une personne assise dans un siège de véhicule (10), dans lequel on prédit un degré pour une adaptation instantanée en tenant compte de la vitesse instantanée du véhicule et on le règle au moyen d'un système d'adaptation intégré dans le siège de véhicule, **caractérisé en ce que** l'on effectue la prédiction à partir de données mémorisées concernant le tracé instantané de la route, sur lequel les données instantanées du véhicule sont projetées, et **en ce que** l'on exécute la commande du système d'adaptation (18) en tenant compte du temps d'adaptation inhérent au système, de telle façon qu'à l'apparition de l'événement nécessitant l'adaptation, de préférence le franchissement d'une courbe, on obtienne au moins un préréglage de l'adaptation adapté à celui-ci.

2. Procédé selon la revendication 1, **caractérisé en ce que** pendant l'événement nécessitant l'adaptation, l'on effectue une correction du préréglage de l'adaptation avec des données du véhicule mesurées instantanément.

3. Procédé selon la revendication 1 ou 2,
**caractérisé en ce que** l'on importe le tracé instantané de la route à partir d'une carte routière numérique, qui contient des données locales sur un réseau routier et des données d'attribut associées aux données locales, **en ce que** l'on mémorise des données d'adaptation du siège effectuées en association avec des données locales comme attributs d'adaptation dans la carte routière, et **en ce que**, lors d'un nouveau passage dans cette portion locale, l'on effectue la commande du système d'adaptation (18) en utilisant les attributs d'adaptation.

4. Procédé selon la revendication 3, **caractérisé en ce que** l'on mémorise comme attributs d'adaptation un degré d'adaptation expurgé de la vitesse.

5. Procédé selon l'une quelconque des revendications 1 - 4, **caractérisé en ce que** pour déterminer le degré d'adaptation nécessaire lors du franchissement d'une courbe, on prédit l'accélération transversale attendue agissant sur le siège de véhicule, et on calcule ainsi le degré d'appui latéral.

6. Procédé selon la revendication 2 et 5,
**caractérisé en ce que** l'on mesure l'accélération transversale se produisant réellement lors du franchissement de la courbe et l'on corrige ainsi le degré d'appui latéral.

7. Procédé selon la revendication 3 et 5 ou 6, **caractérisé en ce que** l'on mémorise comme attributs d'adaptation l'accélération transversale prédite et/ou mesurée.

8. Procédé selon l'une quelconque des revendications 5 - 7, **caractérisé en ce qu'**un signal d'avertissement pour le conducteur est émis dans le cas où l'accélération transversale prédite dépasse un maximum de l'accélération transversale déduit d'une vitesse limite prédite pour le franchissement d'une courbe.

9. Procédé selon la revendication 8, **caractérisé en ce que** le signal d'avertissement est envoyé au conducteur de manière haptique par une augmentation saccadée de l'appui latéral sur le côté du siège situé à l'extérieur dans la direction de la courbure de la courbe.

10. Siège de véhicule avec une partie de siège (11) et un dossier (12), avec un système d'adaptation (18) pour l'adaptation de l'appui du corps, en particulier de l'appui latéral d'une personne assise dans le siège de véhicule (10), qui présente des coussins d'air (14 - 17) intégrés au moins dans des bourrelets latéraux de la partie de siège (11) et/ou dans le dossier (12) et un dispositif de régulation de l'air comprimé (22) pour régler la pression de l'air dans les coussins d'air (14 - 17), avec une unité de commande (19) présentant un calculateur de commande (25), qui est raccordée au dispositif de régulation de l'air comprimé (22) et qui produit, à partir d'une valeur d'une accélération transversale qui lui est transmise, un signal de commande pour le réglage d'une pression de remplissage par le dispositif de régulation de la pression (22), et avec un détecteur (30) pour mesurer la vitesse du véhicule, **caractérisé par** un appareil de prédiction (32) pour prédire l'accélération transversale attendue dans une courbe instantanée, et par un filtre de prédiction (33), qui applique l'accélération transversale prédite à l'unité de commande (19) en tenant compte des temps de remplissage du système d'adaptation (18) en fonction de la pression de remplissage.

11. Siège de véhicule selon la revendication 10, **caractérisé en ce que** l'appareil de prédiction (32) présente une carte routière numérique, qui contient des données locales sur un réseau routier et des données d'attribut associées aux données locales, **en ce que** des instants de la pression de remplissage par le dispositif de régulation de l'air comprimé (22) peuvent être mémorisés sous forme d'attributs d'adaptation dans la carte routière en association avec la vitesse du véhicule et les données locales et **en ce que**, en cas de nouveau franchissement de la portion locale, le filtre d'adaptation (33) adapte les attributs d'adaptation à la vitesse instantanée du véhicule et les prend en compte pour la détermination de l'instant de l'application de l'accélération transversale prédite à l'unité de commande (19).

12. Siège de véhicule selon la revendication 10, **caractérisé en ce que** l'appareil de prédiction (32) présente une carte routière numérique, qui contient des données locales sur un réseau routier et des données d'attribut associées aux données locales, **en ce que** des pressions de remplissage commandées par le dispositif de régulation de l'air comprimé (22) peuvent être mémorisées, expurgées de la vitesse, comme attributs d'adaptation dans la carte routière en association avec les données locales et **en ce qu'**en cas de nouveau franchissement de la portion locale, le filtre de prédiction (33) applique les attributs d'adaptation directement comme valeurs de la pression de consigne au calculateur de commande (25).

13. Siège de véhicule selon l'une quelconque des revendications 10 - 12, **caractérisé en ce que** l'appareil de prédiction (32) prédit un maximum de l'accélération transversale à partir d'une vitesse limite prédite avec laquelle une courbe instantanée peut être franchie et, en cas de dépassement du maximum par l'accélération transversale prédite, applique une valeur de pression maximale comme valeur de pression de consigne pour un réglage de la pression de remplissage dans les coussins d'air (14 - 17), qui sont disposés sur le côté du siège de véhicule (10) situé à l'extérieur dans la direction de la courbure de la courbe.
